(19)

Europäisches Patentamt
European Patent Office
Office européen des brevets

(11) Veröffentlichungsnummer: **0 576 703 B1**

(12) # EUROPÄISCHE PATENTSCHRIFT

(45) Veröffentlichungstag der Patentschrift: **02.11.95**

(51) Int. Cl.$^{6}$: **F16H 61/02**

(21) Anmeldenummer: **92111076.3**

(22) Anmeldetag: **30.06.92**

(54) **Getriebesteuerung.**

(43) Veröffentlichungstag der Anmeldung:
**05.01.94 Patentblatt 94/01**

(45) Bekanntmachung des Hinweises auf die Patenterteilung:
**02.11.95 Patentblatt 95/44**

(84) Benannte Vertragsstaaten:
**DE FR GB IT**

(56) Entgegenhaltungen:
**EP-A- 0 471 102**
**DE-A- 3 341 652**
**DE-A- 4 112 577**

**PATENT ABSTRACTS OF JAPAN vol. 15, no. 321 (M-1147)(4849) 15. August 1991**

**PATENT ABSTRACTS OF JAPAN vol. 14, no. 514 (M-1046)(4457) 13. November 1990**

(73) Patentinhaber: **SIEMENS AKTIENGESELLSCHAFT**
**Wittelsbacherplatz 2**
**D-80333 München (DE)**

(72) Erfinder: **Graf, Friedrich, Dipl.-Ing.**
**Amselweg 5**
**W-8400 Regensburg (DE)**
Erfinder: **Probst, Gregor, Dipl.-Ing.**
**Dreisesselstrasse 15**
**W-8300 Landshut (DE)**
Erfinder: **Weil, Hans-Greorg, Dipl.-Ing.**
**Wangenerstrasse 64**
**W-8130 Starnberg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 576 703 B1

## Beschreibung

Die Erfindung betrifft eine Steuerung für ein Kraftfahrzeug-Getriebe (Getriebesteuerung) nach dem Oberbegriff von Anspruch 1.

Bei einer bekannten derartigen Getriebesteuerung werden die Getriebegänge in Abhängigkeit von der Fahrpedalstellung und der Fahrzeuggeschwindigkeit anhand von abgespeicherten Schaltkennfeldern automatisch geschaltet (JP-A 31 21 354). Ein Fuzzy-Logik-Regler weist eine Regelbasis auf, durch die verschiedene, Fahrzustände und den Lastzustand des Kraftfahrzeugs charakterisierende Signale ausgewertet und daraufhin eine Umschaltung auf ein entsprechendes Schaltkennfeld bewirkt wird. Die Fuzzy-Logik dient dazu, einen "optimalen" Gang zu wählen.

Bei einer anderen bekannten automatischen Getriebesteuerung (DE-C 33 41 652) werden die Getriebegänge in Abhängigkeit von der Fahrpedalstellung und der Fahrzeuggeschwindigkeit oder Motordrehzahl anhand von abgespeicherten Schaltkennfeldern automatisch geschaltet. Dabei werden außerdem der Lastzustand des Kraftfahrzeugs, d.h. die Beladung des Fahrzeugs und die Steigung der Fahrbahn, und der individuelle Fahrstil des Fahrers berücksichtigt. Die Berücksichtigung der jeweiligen Fahrsituation erfolgt durch Kennfeldadaption, d.h. durch Auswahl eines für die jeweilige Fahrsituation geeigneten Kennfeldes, nach dem dann die Schaltungen gesteuert werden. Um die verschiedenen, das Fahrverhalten des Kraftfahrzeugs beeinflußenden Größen zu berücksichtigen, wird ein erheblicher Aufwand mit bekannten Methoden der Regel- und Steuerungstechnik getrieben.

Bei anderen bekannten automatischen Getriebesteuerungen (US-A 4 841 815; EP-A 0 375 155; A. Takahashi, A method of predicting driving environment, IFSA '91, Brussels, S. 203 - 206) erfolgt die Auswahl des jeweils zu schaltenden Ganges durch Regler, die nach den Methoden der Fuzzy-Logik arbeiten. Mit dieser Logik wird Expertenwissen, das durch Erfahrung gewonnen worden ist, in Form einer sog. Regelbasis beschrieben und damit für die Regel- oder Steuervorgänge verwendet. Die Regeln der Fuzzy-Logik sind allerdings mit gewissen Unwägbarkeiten behaftet, sie sind theoretisch noch nicht vollständig durchdrungen. Unter Umständen können deshalb Fehlfunktionen auftreten, die bei den in der Automobiltechnik geltenden sehr hohen Sicherheitsanforderungen unter Umständen nicht tolerierbar sind.

Der Erfindung liegt die Aufgabe zugrunde, eine Getriebesteuerung zu schaffen, die die verschiedenen Einflußgrößen auf die Fahrdynamik ohne großen Aufwand berücksichtigt, die andererseits aber uneingeschränkt betriebssicher ist.

Diese Aufgabe wird durch eine Getriebesteuerung nach Patentanspruch 1 gelöst.

Die Vorteile der erfindungsgemäßen Getriebesteuerung liegen insbesondere darin, daß sich mit der Fuzzy-Logik in einfacher Weise viele Einflußgrößen berücksichtigen lassen, daß aber durch den Einsatz von Kennfeldern immer gewährleistet ist, daß keine unzulässigen Schaltungen durchgeführt werden.

Ausführungsbeispiele der Erfindung werden im folgenden anhand der Zeichnung erläutert. Es zeigen:

- Figur 1 die wesentlichen Bestandteile eines Kraftfahrzeugs mit einer erfindungsgemäßen Getriebesteuerung, in schematischer Darstellung,
- Figur 2 die Getriebesteuerung des Kraftfahrzeugs nach Figur 1 als Blockdiagramm,
- Figur 3 ein Fuzzy-Regler in einem geschlossenem Regelkreis,
- Figur 4 Drosselklappenwinkel, über den Weg oder die Fahrstrecke des Kraftfahrzeugs aufgetragen (durchgezogene Linie: Fuzzy-Getriebesteuerung; gestrichelte Linie: konventionelle Getriebesteuerung)
- Figur 5 das Bremslichtsignal über den Weg,
- Figur 6 die Geschwindigkeit des Kraftfahrzeugs über den Weg, Figur 7 die Querbeschleunigung des Kraftfahrzeugs über den Weg,
- Figur 8 die durch die Getriebesteuerung nach Figur 2 geschalteten Gänge über den Weg,
- Figur 9 die von einer Getriebesteuerung ohne Fuzzy-Regler geschalteten Gänge über den Weg,
- Figur 10 schematische Darstellung der von einem Kraftfahrzeug nach Figur 1 mit Fuzzy-Logik durchlaufenen Fahrstrecke,
- Figur 11 eine entsprechende, von einem Kraftfahrzeug mit einer nicht erfindungsgemäßen Getriebesteuerung durchfahrenen Fahrstrecke,
- Figur 12 ein Fahrererkennungssignal der Getriebesteuerung nach Figur 2 über den Weg,
- Figur 13 ein Lasterkennungssignal der Getriebesteuerung nach Figur 2 über den Weg,
- Figur 14 Schaltkennfeld-Nummern der Getriebesteuerung nach Figur 2 über den Weg,
- Figur 15 ein Hochschaltverbotsignal der Getriebesteuerung nach Figur 2 über den Weg und
- Figur 16 ein Rückschaltverbot-Signal der Getriebesteuerung nach Figur 2 über den Weg aufgetragen.

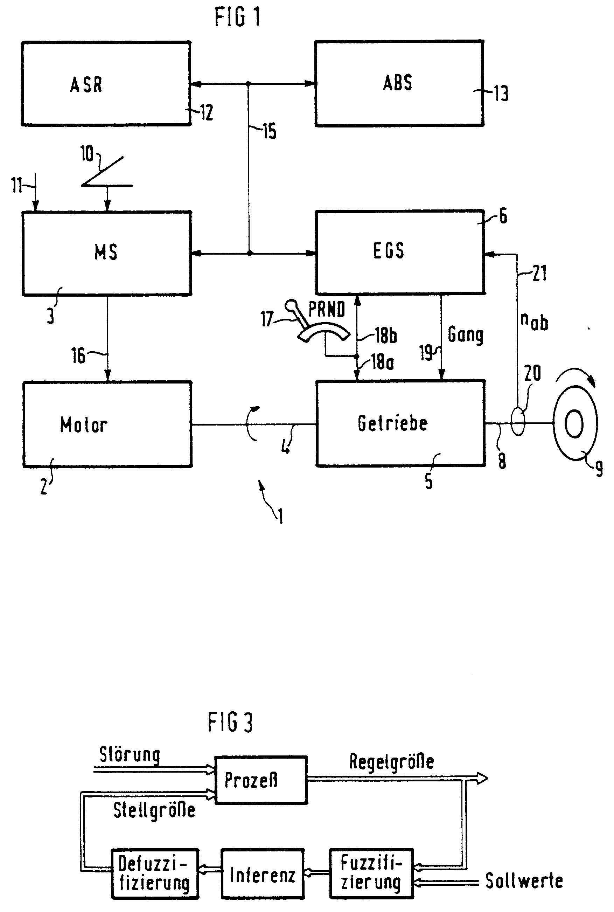

Ein (schematisch dargestelltes) Kraftfahrzeug 1 (Figur 1) weist einen Motor 2 auf, der von einer Motorsteuerung 3 gesteuert wird. Die Motorabtriebswelle 4 ist über einen - hier nicht getrennt dargestellten - Drehmomentwandler mit einem Getriebe 5 verbunden, das von einer erfindungsgemäßen elektronischen Getriebesteuerung 6 gesteuert wird. Die Getriebeabtriebswelle 8 ist mit der angetriebenen Achse des Kraftfahrzeugs verbunden, die hier durch ein angetriebenes Rad 9 dargestellt wird.

Über ein Fahrpedal 10 gibt der Fahrer des Kraftfahrzeugs seine Befehle - genau genommen sind es seine Wünsche - an die Motorsteuerung 3. Bei Betätigungen der Bremsen gelangt ein, z.B. von einem Bremslichtschalter erzeugtes, Bremssignal über eine Leitung 11 in die Motorsteuerung 3. Das Kraftfahrzeug ist außerdem mit einer Radschlupf- oder Antischlupfregelung (ASR) 12 und einem Antiblockiersystem (ABS) 13 versehen, die durch Signalleitungen 15 untereinander sowie mit der Motorsteuerung 3 und der Getriebesteuerung 6 zwecks Austausch von Signalen verbunden sind. Über eine Signalleitung 16 sendet die Motorsteuerung 3 an den Motor 2 Signale, mit denen die Zündung, die Einspritzung und die Drosselklappe gesteuert werden (letztere nur, wenn eine entsprechende Steuereinrichtung vorhanden ist). Über einen Wählhebel 17 bestimmt der Fahrer in üblicher Weise den Fahrbereich des automatischen Getriebes 5. Die Wählhebelsignale gelangen über eine mechanische Verbindung zu dem Getriebe 5 und als elektrische Signalleitung 18b zu der Getriebesteuerung 6. Die Getriebesteuerung 6 sendet über eine Signalleitung 19 Steuersignale an das Getriebe 5, die den jeweiligen Getriebegang festlegen und die Schaltvorgänge bestimmen.

Die Drehzahl der Getriebeabtriebswelle und damit die Raddrehzahl wird von einem Drehzahlsensor 20 über eine Signalleitung 21 an die Getriebesteuerung 6 gemeldet.

Zumindest die Signalleitungen 15, die die Steuergeräte 3, 6, 12 und 13 miteinander verbinden, können entweder aus einzelnen Signalleitungen, die jeweils nur ein Signal übertragen, oder aus einem bidirektionalen Bus in Form eines lokalen Netzes (LAN = local area network) oder aus einem sonstigen bekannten Bus bestehen.

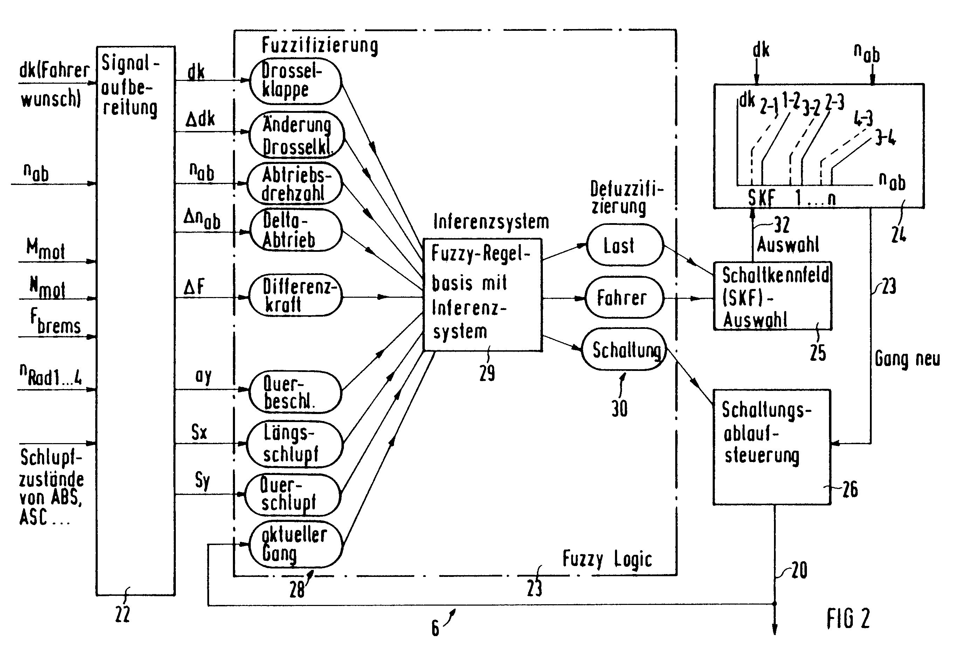

Die elektronische Getriebesteuerung 6 (Figur 2) weist auf: eine Signalaufbereitungsschaltung (kurz: Signalaufbereitung) 22, einen Fuzzy-Logik-Regler (kurz: Fuzzy-Regler) 23, einen Kennfeldspeicher 24 mit mehreren Schaltkennfeldern, eine Schaltkennfeld (SKF)-Auswahl 25 und eine Schaltungsablaufsteuerung 26.

In der Signalaufbereitung 22 werden mehrere Eingangssignale aufbereitet, die von verschiedenen Sensoren oder von den anderen Steuergeräten geliefert werden. Die Eingangssignale werden in von dem Fuzzy-Logik-Regler 23 verarbeitbare charakteristische Größen gewandelt.

Auf den in der Zeichnung angedeuteten Eingangsleitungen gelangen (von oben nach unten) folgende Meßwerte oder Parameter zu der Signalaufbereitung 22: der sich in der Stellung der Drosselklappe oder allgemein des Fahrpedals niederschlagende Fahrerwunsch Dk; die Getriebe-Abtriebsdrehzahl $n_{ab}$; das Motordrehmoment $M_{mot}$; die Motordrehzahl $N_{mot}$; die Bremskraft $F_{brems}$; die Raddrehzahlen $n_{Rad1}...n_{Rad4}$, und ein Schlupfzustands-Signal, das z.B. von der Radschlupfregelung 12 oder von dem Antiblockiersystem 13 geliefert wird. Die Getriebesteuerung 6 verfügt also auch über Betriebsparameter oder Sensorsignale anderer Steuergeräte (falls diese vorhanden sind).

In der Signalaufbereitung 22 werden aus den Eingangssignalen auch abgeleitete Größen berechnet.

Die Fahrpedal-Verstellgeschwindigkeit ΔDk wird als gleitender Mittelwert (moving average) des Betrags der Änderung des zyklisch abgetasteten Werts der Geschwindigkeit berechnet, wobei der jeweils letzte Wert zum Beispiel mit 80 % und der neueste Wert mit 20 % gewichtet werden.

Die Fahrzeugquerbeschleunigung ay wird aus den von Drehzahlsensoren gelieferten Radgeschwindigkeiten wie folgt berechnet:

$$ay = \frac{(v_{vr} - v_{vl}) * (v_{vl} + v_{vr})}{2\ b}$$

wobei

| | | |
|---|---|---|
| $b$ | = | die Fahrzeugbreite |
| $v_{vl}$ | = | die Radgeschwindigkeit vorne links |
| $v_{vr}$ | = | die Radgeschwindigkeit vorne rechts (bei Heckantrieb oder Allradantrieb) |

sind.

Die vorstehende Berechnung der Querbeschleunigung ay ist nur dann korrekt, wenn keine signifikanten Schlupfzustände vorliegen. Da aber im Fall von Schlupfzuständen andere Regeln höher priorisiert sind als der Einlfuß der Querbeschleunigung, so wirkt sich der Verlust der Aktualität von ay nicht aus, wenn ay bei Vorhandensein von Schlupf auf einen Ersatzwert gesetzt wird.

Eine andere abgeleitete Größe ist die Differenzkraft $\Delta F$, die sich folgendermaßen berechnen läßt:

$$\Delta F = F_b(t) - F_L(t) - F_R(t) - m_{Fzg} * \frac{d}{dt} n_{ab}(t) - F_{br}(t)$$

hierin sind:

| | |
|---|---|
| $F_b(t)$ | = die Antriebskraft |
| $F_L(t)$ | = der Luftwiderstand |
| $F_R(t)$ | = der Rollwiderstand |
| $m_{Fzg} * \Delta n_{ab}(t)$ | = der Beschleunigungswiderstand und |
| $F_{br}(t)$ | = die Bremskraft |

F stellt die Kraftbilanz der auf das Kraftfahrzeug einwirkenden Kräfte am Getriebeabtrieb dar. In der Ebene muß sie ohne äußere Last - z.B. Zuladung oder Anhängerbetrieb - null sein. Ist sie es nicht, so läßt sich daraus eine erhöhte Fahrzeugmasse, eine Fahrbahn-Neigung und/oder eine äußere Last (Zuladung, Anhängerbetrieb usw.) erkennen.

Kann die Bremskraft von einem ABS-Steuergerät oder einem entsprechenden Sensor geliefert werden, so läßt sich nach vorstehend genannter Gleichung ein aussagefähiger Wert für die Differenzkraft berechnen. Wird die Bremskraft nicht geliefert, so muß dies von der (noch zu beschreibenden) Regelbasis berücksichtigt werden.

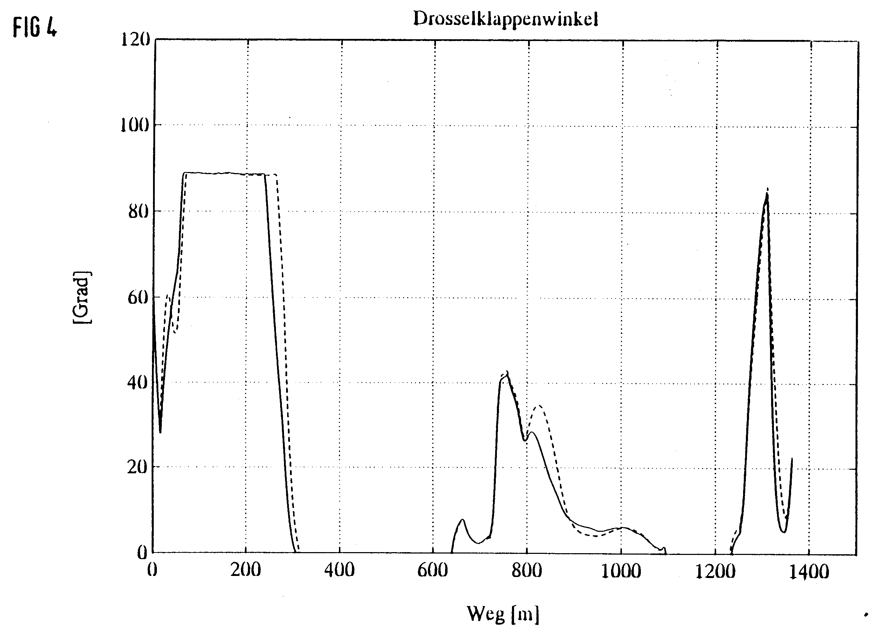

Fuzzy-Regler als solche sind in der Literatur beschrieben (D. Abel: Fuzzy control - eine Einführung ins Unscharfe, AT 39 (1991) Heft 12). Die Ankopplung eines Fuzzy-Reglers an einen Prozeß erfolgt analog zu einem konventionellen Regler, d.h. aus einer gemessenen Regelgröße und einem vorgegebenen Sollwert wird durch einen Algorithmus eine Stellgröße berechnet. Dieser "Algorithmus" besteht bei einem Fuzzy-Regler aus drei Komponenten: ein Fuzzifizierer, ein Inferenzsystem und ein Defuzzifizierer (Figur 3). Durch die Fuzzifizierung werden die exakt bestimmten (engl. crisp) Größen des Sollwerts und der Regelgröße in linguistische Variablen abgebildet. Nachfolgend werden in dem Inferenzsystem die in Form einer sog. Regelbasis abgelegten linguistischen Regeln abgearbeitet und es wird eine unscharf formulierte Stellgröße bestimmt. In diesen Regeln (siehe Beispiel weiter hinten) ist das gewünschte Systemverhalten festgelegt. Die durch Inferenz bestimmte Stellgröße wird durch die Defuzzifizierung in eine physikalische Stellgröße umgesetzt, die dann den zu steuernden Prozeß direkt beeinflußt.

Die in der Signalaufbereitung 22 (Figur 2) in logische Größen umgewandelten Meßwerte und abgeleiteten Größen gelangen über aus der Zeichung ersichtliche Leitungen zu dem Fuzzifizierer 28 des Reglers 23 und werden dort in linguistische Variablen umgesetzt und an das die Fuzzy-Regelbasis enthaltende Inferenzsystem 29 übermittelt. Mit den in der Regelbasis definierten Regeln wird der Lastzustand des Kraftfahrzeugs berechnet, eine Fahrererkennung durchgeführt, d.h. bestimmt, ob das Fahrverhalten des Fahrers sportlich oder verbrauchsorientiert ist, und schließlich festgelegt, ob eine Hoch- oder eine Rückschaltung erlaubt oder verboten ist.

Das Inferenzsystem 29 erzeugt entsprechend drei Signale "Last", "Fahrer" und "Schaltung", die in dem Defuzzifizierer in physikalische Stellgrößen umgewandelt werden und als Ausgangssignale des Reglers 23 das Schalten des automatischen Getriebes steuern. Das Last- und das Fahrer-Signal werden in der Schaltkennfeld-Auswahl miteinander verknüpft und ergeben ein Auswahlsignal, das über eine Signalleitung 32 zu dem Kennfeldspeicher 24 gelangt und dort das in dem jeweiligen Fall günstigste Schaltkennfeld auswählt.

Eingangssignale des Kennfeldspeichers 24 sind der Fahrerwunsch (Drosselklappenstellung DK) und die Getriebeabtriebsdrehzahl $n_{ab}$. Überschreitet der durch diese Signale festgelegte Betriebszustand des Kraftfahrzeugs eine Kennlinie, so wird ein Signal erzeugt, das den neuen Gang festlegt und über eine Signalleitung 33 an die Schaltungsablaufsteuerung 26 übermittelt wird. Falls das Signal dort nicht - in den noch zu erläuternden Fällen - durch das Signal "Schaltung" gesperrt wird, wird es über die Signalleitung 20 an das Getriebe 5 weitergeleitet und bewirkt dort das Schalten in den neuen Gang.

Das Signal "Last" stellt ein Maß für extern bedingte Lastzustände in Form einer erhöhten Fahrzeugbeladung und/oder des Befahrens einer Steigung oder eines Gefälles dar. Das Signal "Fahrer" beschreibt die Fahrweise des Fahrers, die indirekt aber auch durch extern bedingte Umstände wie Typ der Fahrstrecke (Stadt, Landstraße, Autobahn) beeinflußt sein kann. Beide Signale bewirken die Auswahl jeweils geeigneter Schaltkennfelder "SKF1 bis SKFn" in dem Kennfeldspeicher 24. Dazu existieren unterschiedliche Möglichkeiten. Im Ausführungsbeispiel werden beim Über- oder Unterschreiten scharfer Grenzen für die Signale geeignete Schaltkennfelder selektiert. Dabei hat die Anpassung an die externen Lastzustände Vorrang vor der Anpassung an den Fahrstil. Eine andere Möglichkeit besteht darin, Schaltkennlinien aus einzelnen Schaltkennfeldern ganz oder teilweise zu verschieben.

Das auch anhand eines Schaltkennfelds gewonnene Signal "Gang neu" wird der Schaltungsablaufsteuerung zugeführt. In dieser kann der Fuzzy-Logik-Regler mit dem Signal "Schaltung" aktiv eingreifen und bestimmte Schaltungsarten unterdrücken (eine Hoch- oder Rückschaltung) oder jede Schaltung verhindern. Mit dem Signal "Schaltung" werden Schaltvorgänge, die sich aus den Schaltkennfeldern ergeben, dynamisch korrigiert. Ein Beispiel ist die schnelle Kurvenfahrt. Durch die Kennfeldschaltung wird beim Kurveneinlauf, wenn der Fahrer vom Gas geht, hochgeschaltet und beim Kurvenauslauf, wenn der Fahrer wieder Gas gibt, zurückgeschaltet. Diese die Fahrstabilität und den Fahrkomfort beeinträchtigenden und den Verschleiß fördernden Schaltvorgänge werden hier aber verhindert. Ein anderes Beispiel sind Schlupfzustände zwischen den Rädern des Kraftfahrzeugs und der Fahrbahn: der Regler 23 vermeidet oder verzögert in der Schaltungsablaufsteuerung 26 Schaltungen, die die Fahrstabilität zusätzlich negativ beeinträchtigen könnten. Darüber hinaus bewirkt die Schaltungsablaufsteuerung 26, wenn sie eine Schaltung zuläßt, ein derartiges Ansteuern der elektro-hydraulischen Aktuatoren in dem Getriebe 5, daß die Gangwechsel schonend und komfortabel erfolgen.

Die verbesserte Fahrstabilität und der erhöhte Fahrkomfort werden durch das in der Fuzzy-Regelbasis enthaltene Expertenwissen erreicht, die Sicherheit bei der Getriebesteuerung wird durch die Verwendung von Schaltkennfeldern gewährleistet. Bei der Erstellung der Schaltkennfelder sind viele Informationen eingearbeitet worden, z.B. die Momentenreserve im neuen Gang, der Kraftstoffverbrauch usw.), die damit der Getriebesteuerung unmittelbar zur Verfügung stehen. Diese wird dadurch von der sehr aufwendigen Berechnung dieser Informationen entlastet. Unzulässig hohe oder niedrige Motordrehzahlen werden sicher verhindert. Der Fahrer muß in keinem Fall in die Getriebesteuerung eingreifen. Der Fuzzy-Logik-Regler 23 wird mit Hilfe eines im Handel erhältlichen sog. CAE-Tools als Programm in der höheren Programmiersprache C oder direkt als Objektcode erstellt. Neben dieser Ausführung als auf einem Mikrorechner ablaufenden Programmen kann der Controller 23 genau so gut in Hardware als Peripherieeinheit eines Rechnersystems realisiert werden.

Das Inferenzsystem 29 enthält folgende drei Regelbasen, wobei jeweils die wichtigsten Regeln exemplarisch aufgeführt sind. Weitere Regeln können vom Fachmann leicht nach diesem Muster aufgestellt werden.

1. Fuzzy-Regelbasis Schaltung

RULE Schaltung__7:

IF (Querbeschl IS VERY__HIGH) AND (Drehzahl__nab IS not__low) THEN Runterschalten = Runterschalten__verboten

RULE Rule 0022:

IF (Querbeschl IS LOW) AND (Schlupf__hinten IS LOW) THEN Runterschalten = Runterschalten__erlaubt

RULE Schaltung__11:

IF (Schlupf__hinten IS HIGH) AND (Drehzahl__nab IS not__low) THEN Runterschalten = Runterschalten__verboten

2. Fuzzy Regelbasis Fahrer

RULE Rule 0013:

IF (delta__dki IS Gas__stark__erhöht) AND (Delta__nab IS schneller) THEN Fahrererkennung = Manta__Fahrer

3. Fuzzy Regelbasis Last

RULE Rule__Last__03:

IF (Diff__Moment IS positiv) AND (Bremse IS unpressed) THEN Last = Berg

Der Inhalt der vorstehend aufgeführten Regelbasen ist ohne weiteres verständlich, die darin verwendeten Größen sind bereits erläutert worden, sie werden hier nur leicht modifiziert geschrieben, so entspricht z .B. die Größe "delta__Dki der Fahrpedalverstellgeschwindigkeit $\Delta DK$ und die Größe "Drehzahl__nab" der Abtriebsdrehzahl-Änderung $\Delta n_{ab}$.

Folgendes sei noch zu den vorstehenden Regelbasen bemerkt:

Zu RULE Schaltung__7:

Bei hoher Querbeschleunigung und höherer Abtriebsdrehzahl ist Rückschalten verboten.

Zu RULE Rule 0022:

Bei geringer Querbeschleunigung und geringem Schlupf ist das Rückschalten erlaubt. Zu RULE 0013:
Bei hoher Fahrpedalgeschwindigkeit und hoher Längsbeschleunigung wird ein sportlicher Fahrer erkannt.
Zu RULE__Last__03:
Bei positiver Momentanbilanz und gelöster Bremse wird ein Berg erkannt.

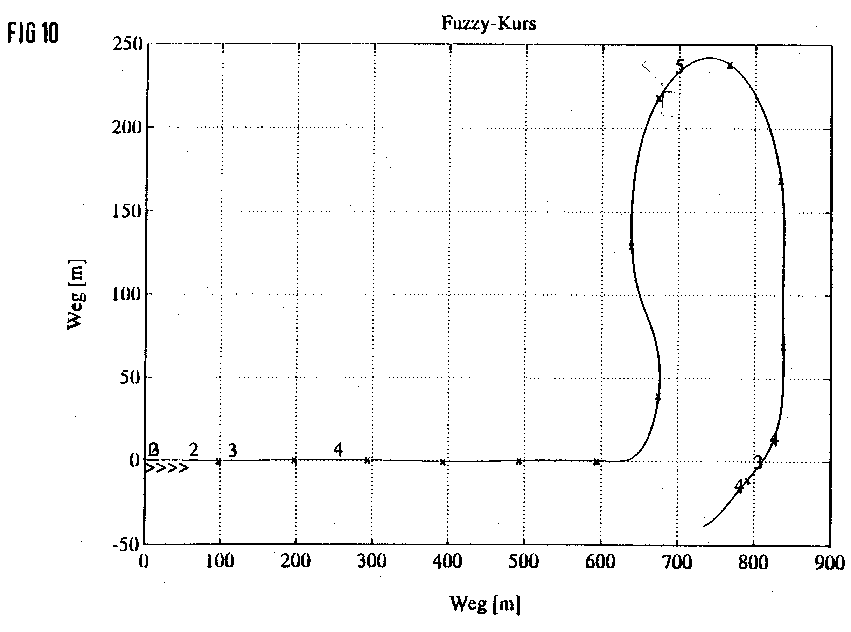

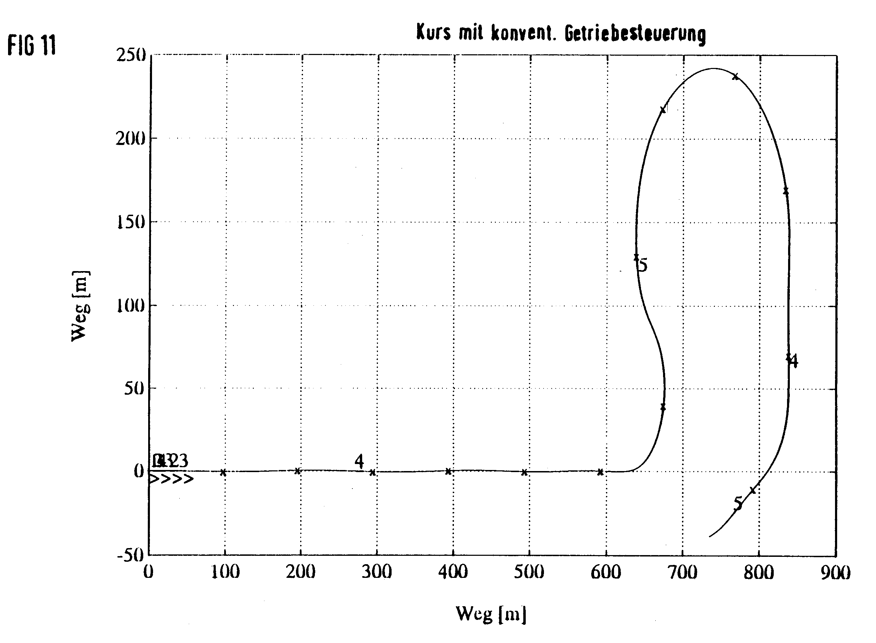

Das Fahrverhalten eines mit einer erfindungsgemäßen Getriebesteuerung versehenen Kraftfahrzeugs wird nun anhand der folgenden Diagramme erläutert und mit dem Fahrverhalten eines Kraftfahrzeugs mit einer konventionellen Getriebesteuerung verglichen. "Konventionell" bedeutet hier nur, daß es eine Getriebesteuerung ohne Fuzzy-Logik-Regler ist, es handelt sich dabei durchaus um eine moderne Getriebesteuerung. Das Verhalten der beiden Kraftfahrzeuge wurde auf derselben Teststrecke beobachtet, deren Verlauf aus den Figuren 10 und 11 ersichtlich ist. Die Strecke erfordert zwei prägnante Fahrmanöver: zum einen fährt das Fahrzeug eine Steigung von 15 % auf einer Länge von 500 m hoch (Weg zwischen 50 m und 550 m), zum anderen erreicht das Fahrzeug in einer langgezogenen Kurve eine relativ hohe Querbeschleunigung (5 m/s$^2$).

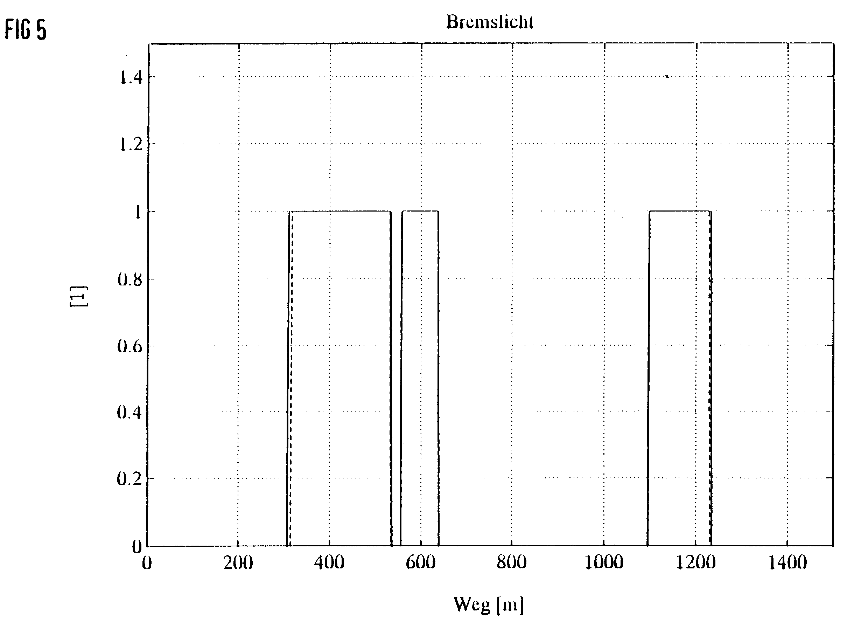

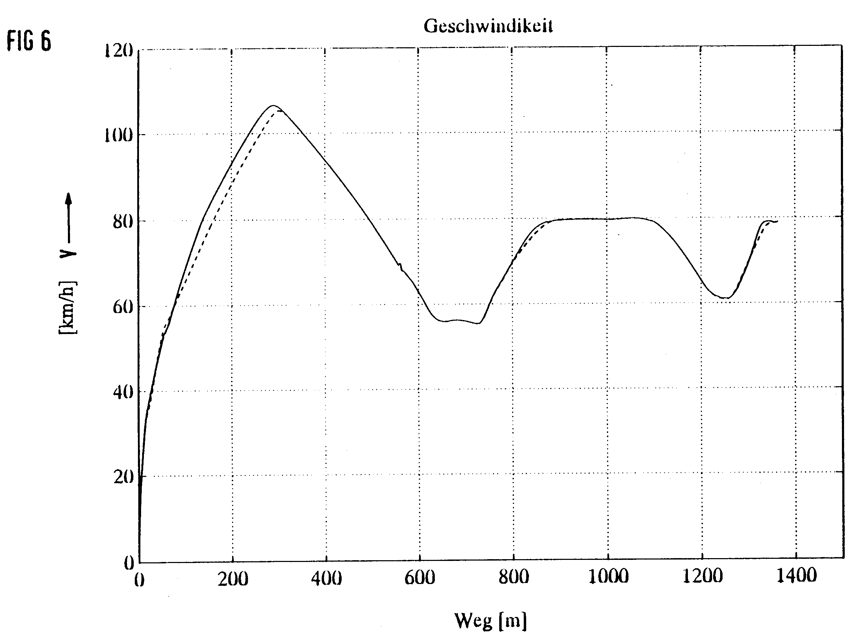

Für beide Fahrten erhielt der Fahrer diesselben Vorgaben bezüglich des Fahrverhaltens. In den folgenden Figuren sind die Kurven für das Fahrzeug mit Fuzzy-Logik-Regler mit einer durchgezogenen Linie und die Kurven für das Fahrzeug mit konventionellem Regler mit strichpunktierten Linien gezeichnet. Aus der über der Wegstrecke aufgetragenen Drosselklappenstellung (Figur 4) und dem Bremslicht, das als binäres Signal vorliegt (Figur 5) läßt sich erkennen, daß sich der Fahrer bei beiden Getriebesteuerversionen annähernd gleich verhält und annähernd das gleiche Geschwindigkeitsprofil (Figur 6) fährt. Bei der Querbeschleunigung sind im Bereich geringer Werte fahrerbedingte Unterschiede erkennbar.

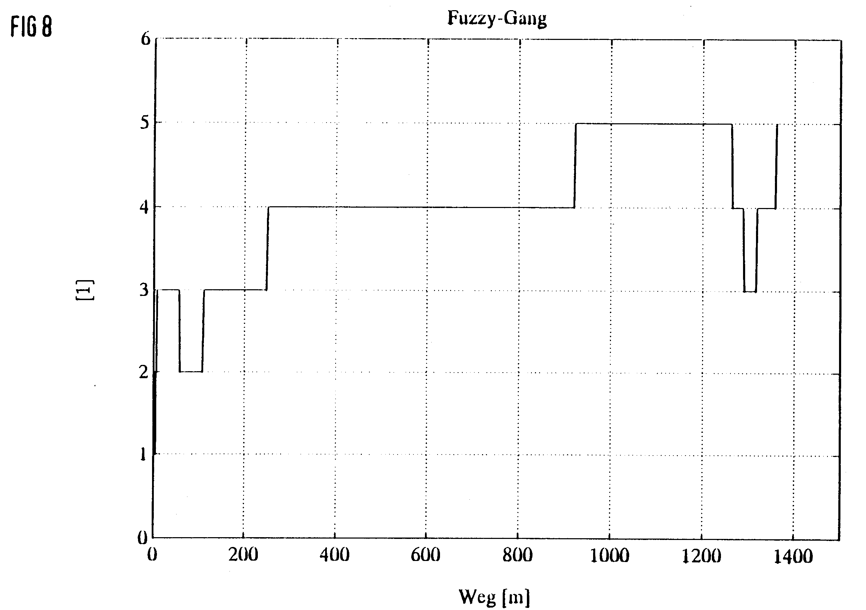

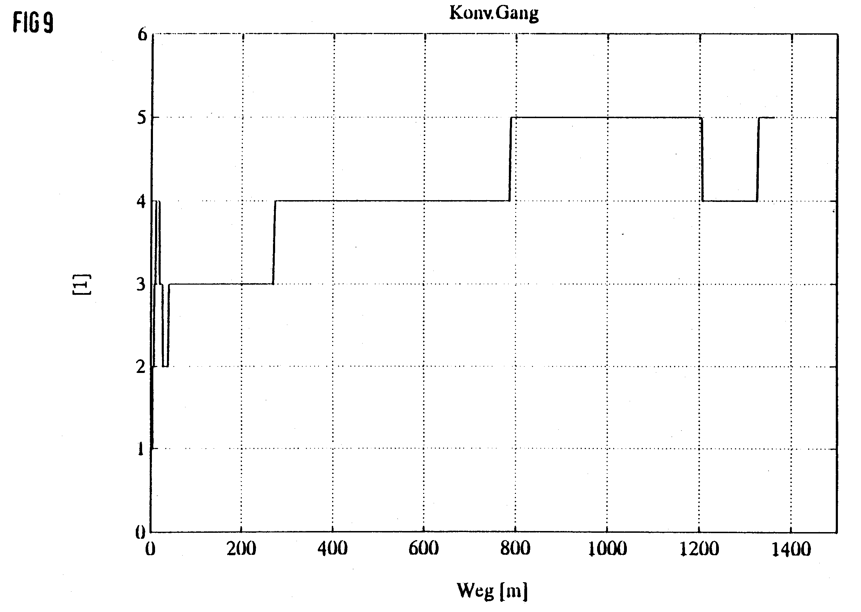

Ein Vergleich der bei beiden Getriebesteuerungsversionen eingelegten Fahrstufen oder Gängen läßt deutliche Unterschiede erkennen. Zum einen sind die Fahrstufen der Fuzzy-Logik-Getriebesteuerung und der konventionellen Getriebesteuerung über der Fahrstrecke (Figur 8 bzw. Figur 9) und zum anderen über dem Kurs - in der x-y-Ebene gezeichnet - (Figur 10 bzw. Figur 11) aufgetragen. Bei der letzten Darstellung zeigen die Pfeilspitzen die Fahrtrichtung an, die kleinen x stellen 100 m-Marken dar und die neben der Kurslinie stehenden Zahlen geben den aktuellen Gang an, der bis zum nächsten Schaltvorgang eingelegt ist.

Zur Erklärung der Unterschiede zwischen den Fahrstufen der beiden Getriebesteuerungsversionen sind die nachfolgend abgebildeten Signale mit einzubeziehen:

- Die Fahrererkennung
- die Lasterkennung
- die Schaltkennfeldnummer
- das Rückschaltverbot.

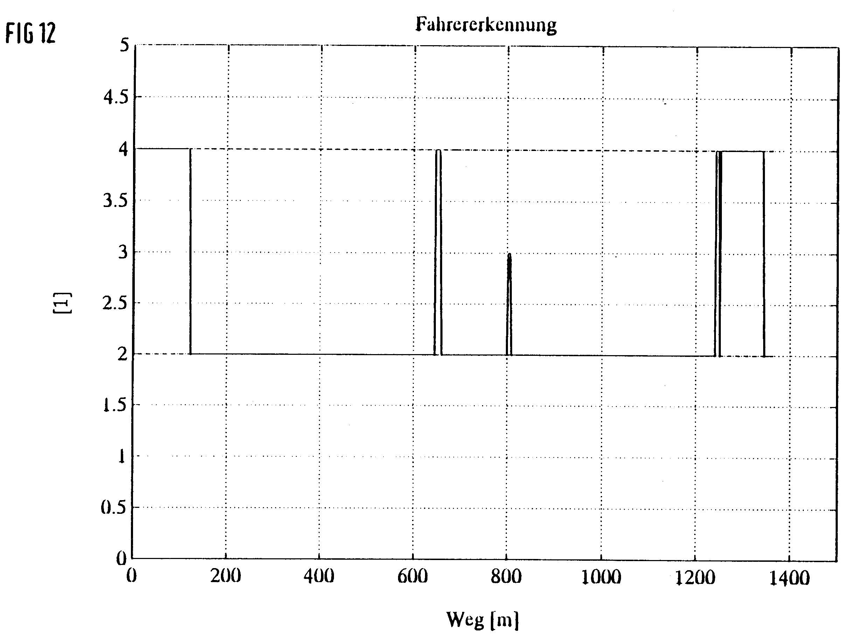

Die Fahrererkennung stellt eine Klassifizierung des Fahrers dar. Ein Durchschnittsfahrer wird mit der Fahrererkennung zwei bewertet, ein sportlicher Fahrer mit der Fahrererkennung vier (Figur 12).

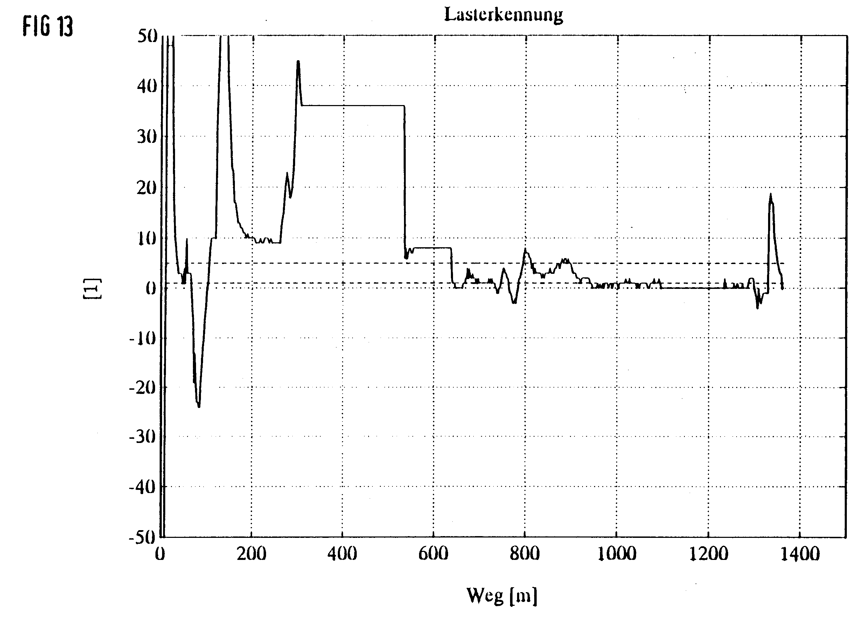

Die Lasterkennung korreliert mit der Momentenbilanz am Getriebeausgang. Übersteigt die Lasterkennung eine obere Lastgrenze, wird auf das fahrleistungsorientierte Schaltkennfeld umgeschaltet, unterschreitet sie eine untere Grenze wird auf das verbrauchsorientierte Schaltkennfeld umgeschaltet (Figur 13).

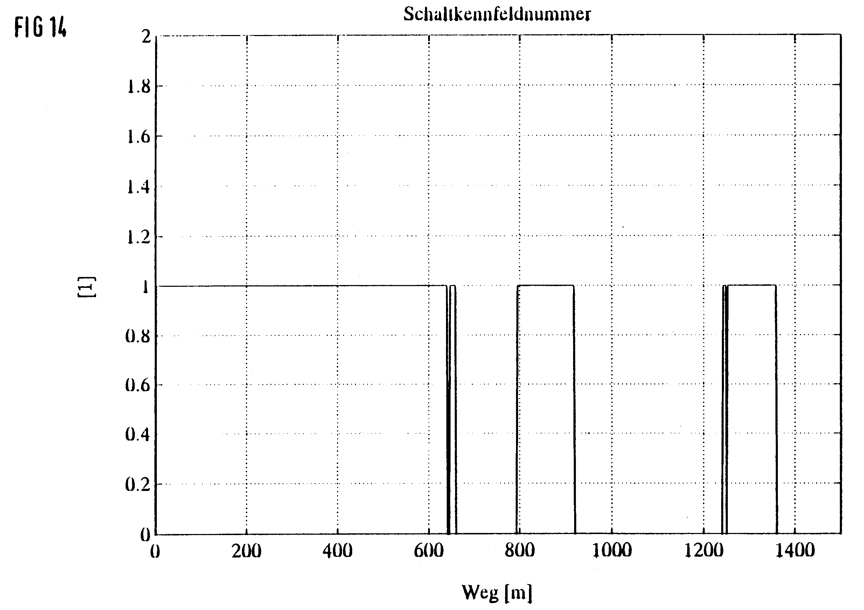

Die Schaltkennfeldnummer (Figur 14) gibt das Schaltkennfeld (0 = verbrauchsorientiert, 1 = fahrleistungsorientiert) an. Es ist auch möglich, zwischen mehreren Schaltkennfeldern umzuschalten. Die Schaltkennfeldnummer resultiert aus einer Verknüpfung der Fahrererkennung und der Lasterkennung.

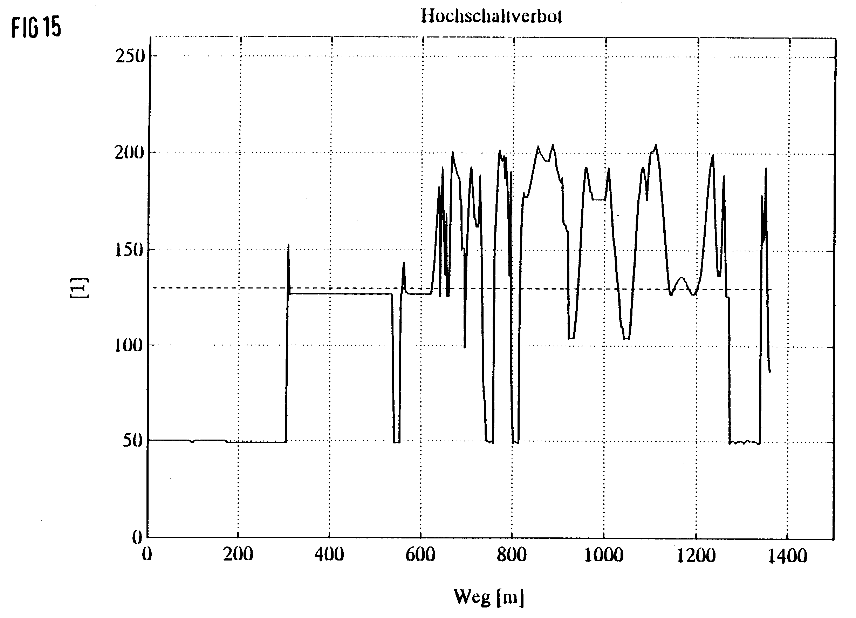

Unter besonderer Berücksichtigung der Fahrzeugdynamik wird durch das Hoch- oder Rückschaltverbot ein Hoch- oder Rückschalten in die nächste Fahrstufe unterbunden. Übersteigt der Wert des Hochschaltverbotes eine feste Grenze, wird das Hochschalten in den größeren Gang verhindert (Figur 15).

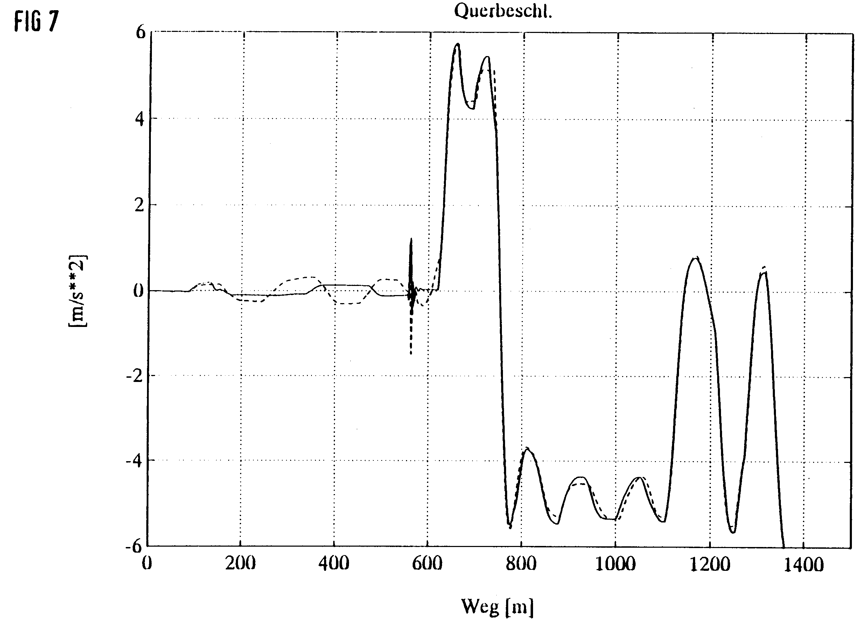

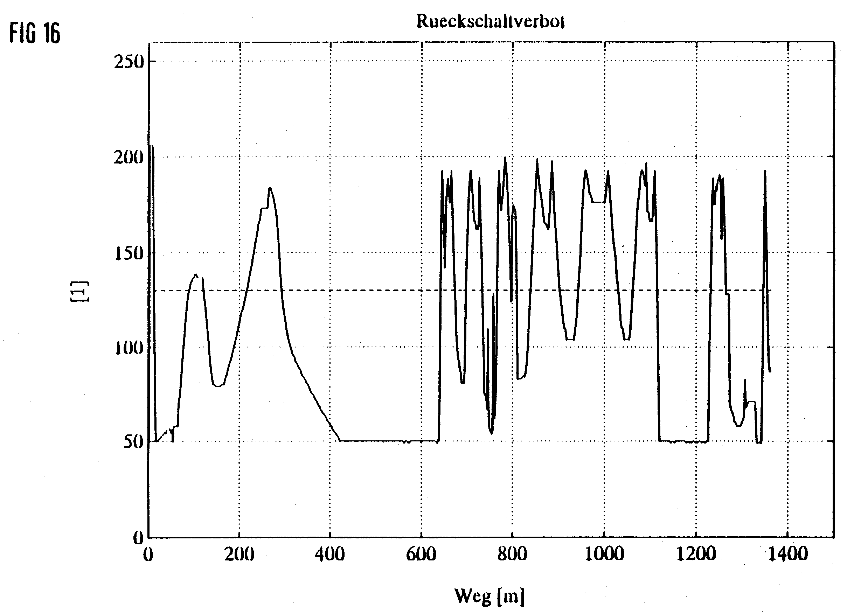

Analoges gilt für das Rückschaltverbot (Figur 16). Das Rückschaltverbot stabilisiert in kritischen Fahrsituationen das Fahrzeug. So wird z.B. in einer Kurve bei einem großen Drosselklappenwinkelsprung und bei einer hohen Querbeschleunigung (vgl. auch Figur 7) das Zurückschalten in den kleineren Gang verhindert, damit das Fahrzeug nicht wegen eines zu hohen Reifenschlupfes ins Schleudern gerät.

Durch die Ausgangssignale Last und Fahrererkennung des Fuzzy-Logik-Reglers 23 wird hier nur eins von zwei Schaltkennfeldern angesteuert. Während der Bergfahrt (der Weg zwischen den 50-m- und 550-m-Marken) wird von der Fuzzy-Getriebesteuerung eine von der konstruktiven Auslegung des Kraftfahrzeugs abweichende Last und ein sportlich orientierter Fahrer erkannt. Die Fuzzy-Getriebesteuerung schaltet auf das leistungsorientierte Schaltkennfeld um. Das hat zur Folge, daß der Motor etwas weiter ausgedreht wird, die Fahrstufenwechsel 2-3 und 3-2 (bei Figur 8 und 10) erfolgen im Vergleich zu den Fahrstufenwechseln bei der konventionellen Getriebesteuerung (Figur 9 und 11) etwas später. In der langgezogenen Kurve (der Weg zwischen den 550-m- und den 1000-m-Marken erkennt die Fuzzy-Getriebesteuerung einen hohen Reifenschlupf und eine hohe Querbeschleunigung. Sie errechnet für bestimmte Streckenabschnitte ein Hochschaltverbot, was bei dem verwendeten Fahrzeuggetriebe zur Stabilisierung führt. Den Fahrsrufenwechsel 4-5 (d.h. den Wechsel von dem vierten in den fünften Gang) verzögert die Fuzzy-Getriebesteuerung gegenüber der konventionellen Getriebesteuerung.

## Patentansprüche

1. Steuerung (6) für ein Kraftfahrzeug-Getriebe (5), durch die die Getriebegänge in Abhängigkeit zumindest von der Fahrpedalstellung und der Fahrzeugeschwindigkeit anhand von abgespeicherten Schaltkennfeldern (SKF1,..., SKFn) automatisch geschaltet werden, und die einen Fuzzy-Logik-Regler (23) mit einer Regelbasis aufweist, durch die verschiedene, Fahrzustände und den Lastzustand des Kraftfahrzeugs charakterisierende Signale (DK, $n_{ab}$,...) ausgewertet und daraufhin Steuersignale erzeugt werden, durch die eine Umschaltung auf ein entsprechendes Schaltkennfeld bewirkt wird, **dadurch gekennzeichnet, daß** durch den Fuzzy-Logik-Regler (23) folgende Steuersignale erzeugt werden:
   - ein den Lastzustand des Kraftfahrzeugs kennzeichnendes erstes Stellsignal (Last) und ein den Fahrstil kennzeichnendes zweites Stellsignal (Fahrer), mit denen die Kennfeld-Umschaltung durchgeführt wird, sowie
   - ein Sperrsignal (Schaltung), das Schaltungen verhindert, die einen dynamisch ungünstigen Fahrzustand ergeben würden.

2. Steuerung nach Anspruch 1, dadurch gekennzeichnet, daß das erste und das zweite Stellsignal (Last, Fahrer) an eine Auswahlschaltung (25) übermittelt werden, von der die Schaltkennfeld-Umschaltung durchgeführt wird.

3. Steuerung nach Anspruch 1, dadurch gekennzeichnet, daß das Sperrsignal (Schaltung) an eine Schaltungs-Ablaufsteuerung (26) übermittelt wird, von der daraufhin eine Schaltung verhindert wird.

4. Steuerung nach Anspruch 1, dadurch gekennzeichnet, daß aus von Raddrehzahlsensoren (20) gelieferten Signalen in einer Signalaufbereitungsschaltung (22) die Querbeschleunigung (ay) des Kraftfahrzeugs ermittelt und daß durch den Regler (23) bei Überschreiten eines für die Querbeschleunigung vorgegebenen Wertes eine Schaltung verhindert wird.

5. Steuerung nach Anspruch 1, dadurch gekennzeichnet, daß in einer Signalaufbereitungsschaltung (22) aus der Antriebskraft, dem Luftwiderstand, dem Rollwiderstand, dem Beschleunigungswiderstand und der Bremskraft eine den Lastzustand des Kraftfahrzeugs charakterisierende Differenzkraft ermittelt und in dem Regler (23) ausgewertet wird.

6. Steuerung nach Anspruch 5, dadurch gekennzeichnet, daß der Wert der Bremskraft von einem ABS-Steuergerät oder einem entsprechenden Sensor (13) an die Signalaufbereitungsschaltung (22) übermittelt wird.

## Claims

1. Control (6) for a motor vehicle transmission (5) by means of which the transmission gears are automatically shifted as a function of at least the position of the accelerator and the speed of the vehicle with reference to stored characteristic shift diagrams (SKF1,..., SKFn) and which has a fuzzy logic controller (23) with a control base by means of which various driving states and signals (DK, $n_{ab}$,...) which characterize the load state of the motor vehicle are evaluated and control signals are produced as a response to this, by means of which control signals a switch-over to a corresponding characteristic shift diagram is brought about, characterized in that the following control signals are produced by the fuzzy logic controller (23):
   - a first adjustment signal (load) which characterizes the load state of the motor vehicle and a second adjustment signal (driver) which characterizes the driving style, with which signals the switch-over of the characteristic diagram is carried out, and
   - an inhibit signal (shift), which prevents shifts which would result in a dynamically unfavourable driving state.

2. Control according to Claim 1, characterized in that the first and the second adjustment signal (load, driver) are transmitted to an evaluation circuit (25) by which the switch-over of the characteristic shift diagram is carried out.

3. Control according to Claim 1, characterized in that the inhibit signal (shift) is transferred to a shift sequence control (26) by which a shift is subsequently prevented.

4. Control according to Claim 1, characterized in that the lateral acceleration (ay) of the motor vehicle is determined from signals, supplied by wheel speed sensors (20), in a signal preparation circuit (22), and in that a shift is prevented by the controller (23) when a value prescribed for the lateral acceleration is exceeded.

5. Control according to Claim 1, characterized in that a difference force which characterizes the load state of the motor vehicle is determined in a signal preparation circuit (22) from the drive force, the air resistance, the rolling resistance, the acceleration resistance and the braking force, and is evaluated in the controller (23).

6. Control according to Claim 5, characterized in that the value of the braking force is transmitted from an ABS control device or a corresponding sensor (13) to the signal preparation circuit (22).

**Revendications**

1. Commande (6) pour une transmission (5) de véhicule automobile, au moyen de laquelle les rapports de transmission sont commutés de façon automatique en fonction au moins de la position de la pédale d'accélérateur et de la vitesse du véhicule, et sur la base de champs mémorisés de caractéristiques de changement de vitesse (SKF1,...,SFKn) la commande comprenant un régulateur à logique floue (23) comportant une base de régulation grâce à laquelle différents signaux (Dk, $n_{ab}$,...) qui caractérisent des états de déplacement et l'état de charge du véhicule automobile, sont évalués et des signaux de commande sont alors produits, ces signaux déclenchant une commutation sur un champ de caractéristiques de changement de vitesse correspondant,

   caractérisée en ce que des signaux de commande indiqués ci-après sont produits par le régulateur à logique floue (23) :

   - un premier signal de réglage (charge), qui caractérise l'état de charge du véhicule automobile, et un second signal de réglage (conducteur), qui caractérise le type de conduite, signaux à l'aide desquels est exécutée la commutation du champ de caractéristiques, ainsi que
   - un signal de blocage (commutation), qui empêche des commutations qui conduiraient à une situation de conduite défavorable du point de vue dynamique.

2. Commande selon la revendication 1, caractérisée en ce que les premier et second signaux de réglage (charge, conducteur) sont retransmis à un circuit de sélection (25), par lequel est exécutée la commutation du champ de caractéristiques de changement de vitesse.

3. Commande selon la revendication 1, caractérisée en ce que le signal de blocage (commutation) est retransmis à une commande d'exécution de commutation (26), qui est alors empêchée d'effectuer une commutation.

4. Commande selon la revendication 1, caractérisée en ce que l'accélération transversale (ay) du véhicule automobile est déterminée à partir de signaux, qui sont délivrés par des capteurs (20) des vitesses de rotation de roues, dans un circuit de préparation de signaux (22) et que, lors d'un dépassement d'une valeur prédéterminée pour l'accélération transversale, une commutation est empêchée par le régulateur (23).

5. Commande selon la revendication 1, caractérisée en ce qu'une force différentielle, qui caractérise l'état de charge du véhicule automobile, est déterminée dans un circuit de préparation de signaux (22) à partir de la force d'entraînement, de la résistance de l'air, de la résistance de roulement, de la résistance à l'accélération et de la force de freinage, et est évaluée dans le régulateur (23).

6. Commande selon la revendication 5, caractérisée en ce que la valeur de la force de freinage est retransmise par l'appareil de commande ABS ou par un capteur correspondant (13) au circuit de préparation de signaux (22).

FIG 1
ASR
ABS
MS
EGS
Motor
Getriebe
PRND
Gang
$n_{ab}$
1
2
3
4
5
6
8
9
10
11
12
13
15
16
17
18a
18b
19
20
21

FIG 3
Störung
Prozeß
Regelgröße
Stellgröße
Defuzzi-
fizierung
Inferenz
Fuzzifi-
zierung
Sollwerte

dk(Fahrer wunsch)
$n_{ab}$
$M_{mot}$
$\dot{M}_{mot}$
$F_{brems}$
$n_{Rad1...4}$
Schlupf-zustände von ABS, ASC ...
Signal-aufbe-reitung
22
dk
Δdk
$n_{ab}$
$\Delta n_{ab}$
ΔF
ay
Sx
Sy
Fuzzifizierung
Drossel-klappe
Änderung Drosselkl.
Abtriebs-drehzahl
Delta-Abtrieb
Differenz-kraft
Quer-beschl.
Längs-schlupf
Quer-schlupf
aktueller Gang
28
Inferenzsystem
Fuzzy-Regel-basis mit Inferenz-system
29
Defuzzifi-zierung
Last
Fahrer
Schaltung
30
Fuzzy Logic
23
6
dk
$n_{ab}$
2-1
1-2
3-2
2-3
4-3
3-4
SKF 1...n
24
32
Auswahl
Schaltkennfeld (SKF)-Auswahl
25
23
Gang neu
Schaltungs-ablauf-steuerung
26
20
FIG 2

FIG 4

Drosselklappenwinkel
[Grad]
120
100
80
60
40
20
0
0
200
400
600
800
1000
1200
1400
Weg [m]

FIG 5

Bremslicht
Weg [m]
[1]
0
200
400
600
800
1000
1200
1400
0.2
0.4
0.6
0.8
1
1.2
1.4

FIG 6
Geschwindikeit
v
[km/h]
0
20
40
60
80
100
120
0
200
400
600
800
1000
1200
1400
Weg [m]

FIG 7

Querbeschl.
[m/s**2]
6
4
2
0
-2
-4
-6
0
200
400
600
800
1000
1200
1400
Weg [m]

FIG 8

Fuzzy-Gang
Weg [m]
[1]
0
1
2
3
4
5
6
0
200
400
600
800
1000
1200
1400

FIG 9
Konv.Gang
Weg [m]
[1]
0
1
2
3
4
5
6
200
400
600
800
1000
1200
1400

FIG 10
Fuzzy-Kurs
Weg [m]
Weg [m]
250
200
150
100
50
0
-50
0
100
200
300
400
500
600
700
800
900
B
2
3
4
5
3
4
4

Kurs mit konvent. Getriebesteuerung
Weg [m]
Weg [m]
0
100
200
300
400
500
600
700
800
900
250
200
150
100
50
0
-50
4
5
4
5

FIG 11

Fahrererkennung
Weg [m]
[1]
0
0.5
1
1.5
2
2.5
3
3.5
4
4.5
5
0
200
400
600
800
1000
1200
1400

FIG 12

FIG 13
Lasterkennung
[t]
50
40
30
20
10
0
-10
-20
-30
-40
-50
0
200
400
600
800
1000
1200
1400
Weg [m]

Schaltkennfeldnummer
[1]
2
1.8
1.6
1.4
1.2
1
0.8
0.6
0.4
0.2
0
200
400
600
800
1000
1200
1400
Weg [m]

FIG 14

Hochschaltverbot
Weg [m]
0
200
400
600
800
1000
1200
1400
0
50
100
150
200
250

FIG 15

FIG 16

Rueckschaltverbot
[1]
250
200
150
100
50
0
0
200
400
600
800
1000
1200
1400
Weg [m]